# EUROPEAN PATENT APPLICATION

(11) **EP 3 121 437 A1**
(43) Date of publication of application: **25.01.2017**
(21) Application number: 16176974.0
(22) Date of filing: 29.06.2016
(51) Int. Cl.: F02M 63/00, F04B 53/10, F04B 53/18, F02M 37/00, F16K 17/04, F02M 59/06, F02M 59/10

(54) **PRESSURE LIMITING VALVE ASSEMBLY FOR A FUEL PUMP**

(30) Priority: 15.07.2015 GB 201512329
(71) Applicant: Delphi International Operations Luxembourg S.à r.l., 4940 Bascharage (LU)
(72) Inventor: LIANG, Junyi, Rochester, Kent ME1 1FA (GB)
(74) Representative: Delphi France SAS

(57) **Abstract**

A pressure limiting valve assembly (10) for a fuel injection system comprises a mounting portion (22) for fixing said valve assembly in a bore (12) provided in a wall (14) of a fluid passage or chamber (16) of the fuel injection system. An obturating member (38), moveable in the bore (12), comprises a sealing surface (52) adapted to engage, in a closed position, a sealing seat (53) associated with an inlet port (18). A spring (56) is arranged in between the mounting portion (22) and the obturating member (38) to bias the obturating member (38) against the sealing seat (53). A guide rod (36) extends from the mounting portion (22) towards the sealing seat (53), and the obturating member (38) engages slideably with the guide rod (36) to be guided thereby during its opening and closing strokes.

## Description

### FIELD OF THE INVENTION

The present invention generally relates to the field of fuel injection systems for internal combustion engines and more specifically to a pressure limiting valve assembly for use in such system, in particular for a high-pressure fuel pump.

### BACKGROUND OF THE INVENTION

As it is well known in the art, a fuel injection system for a diesel internal combustion engine comprises a low-pressure fuel pump in order to feed fuel stored in a fuel tank to a high-pressure fuel pump. This high pressure fuel pump in turn delivers high-pressure fuel to the common rail connected to a set of fuel injector capable of selectively injecting high pressure fuel into the engine combustion chambers.

Referring more specifically to the design of the high pressure fuel pump, it is often of the so-called radial piston type. Such a pump comprises a plurality of pumping units disposed radially about a rotating driveshaft with a cam portion. The cam portion is used to drive the pumping unit components which, together with the driveshaft, are housed in a pump housing referred to as cam box. An embodiment of such radial piston pump used in a fuel injection system is for example described in EP 2 093 421.

The cam box is conventionally fed with fuel from the low pressure fuel pump to serve as lubricant for the rotating drive shaft (and may also serve as passage to feed the fuel into the pumping chambers). The fuel pressure in the cam box may be regulated by means of a pressure limiting valve arranged in a wall of the cam box. The pressure limiting valve opens when the fuel pressure exceeds a predetermined pressure, to allow the exceeding fuel to flow towards an outlet port back to the fuel tank.

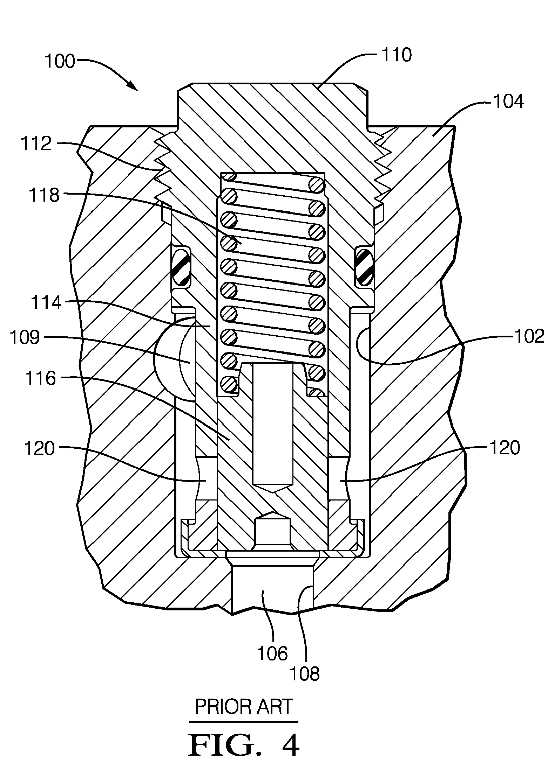

One design of pressure limiting valve developed by the present Applicant is shown in Fig.4. It comprises a generally cylindrical body 100 arranged in a bore 102 in a wall 104 of a cam box chamber 106, the bore 102 having an inlet port 108 and an outlet port 109. The body 100 has a head portion 110 with an outer thread 112, by which it is screwed in bore 102. A cylindrical wall 114 extends from the head portion 110 down to the bottom of the bore 102. The cylindrical wall 114 houses an axially moveable obturating member 116, which is biased by a spring 118 onto an annular seat to close the inlet port 108. When the pressure in the cam box chamber 106 exerts on the obturating member a force exceeding the spring force, the obturating member 116 will raise from its seat. Reference sign 120 designates a plurality of lateral apertures in cylindrical wall 114. When the fuel pressure inside the chamber 106 is sufficient to move the obturating member 116 beyond these apertures120, the fuel will be able to exit the cylindrical wall 114 and flow to the outlet port 109.

Although convenient to install, a problem with this design is that the actual opening of the flow path from inlet port 108 to outlet port 109 requires a precise calculation of the position of the apertures and of the length of the obturating member.

### OBJECT OF THE INVENTION

The object of the present invention is to provide a pressure limiting valve assembly of improved design that does not have the shortcomings of known pressure limiters.

This object is achieved by a pressure limiting valve assembly as claimed in claim 1.

### SUMMARY OF THE INVENTION

According to the present invention, a pressure limiting valve assembly for a fuel injection system comprises a mounting portion for fixing the valve assembly in a bore provided in a wall of a fluid passage or chamber of a component of the fuel injection system. The bore is closed at one end by the mounting portion and defines a fluid passage between a fluid inlet port and a fluid outlet port. The assembly further comprises an obturating member, moveable in the bore. The obturating member comprises a sealing surface adapted to engage, in a closed position, a sealing seat associated with the inlet port. A biasing means is arranged in between the mounting portion and obturating member to bias the obturating member against the sealing seat.

It shall be appreciated that the pressure limiting valve assembly comprises a guide rod that extends from the mounting portion towards the sealing seat. The obturating member engages slideably with the guide rod to be guided thereby during its opening and closing strokes.

The present invention proposes a simple design of pressure limiting valve assembly, where the valve is guided on a rod, avoiding valve lift issues known from prior art solutions using guide sleeves. The presence of a guide rod allows for a controlled linear displacement of the obturating member and ensures a safe positioning of the obturating member on its valve seat at landing.

The present valve assembly has been particularly designed to be used as low pressure limiter arranged in a cam box wall of a high pressure fuel pump.

In one embodiment, the pressure limiting valve assembly comprises an end plate mounted at the end of the guide rod, opposite the mounting portion, configured to cooperate with the inlet port. The end plate preferably extends substantially perpendicularly to the guide rod and advantageously comprises one or more vent holes there through. The obturating member comprises a through bore by which it is slideably engaged on the guide rod and is pushed by the biasing means towards the end plate.

The end plate is further configured to cooperate with the obturating member so that
- in the closed position, the obturating member sealingly rests on the end plate's side facing the mounting portion and covers the one or more vent holes, and
- so that when the fluid pressure acting on the obturating member through the vent hole(s) exceeds the biasing force of the biasing means, the obturating member raises off from the end plate in an open position allowing flow of fluid through the vent hole(s).

The end plate is preferably configured to sealingly engage a sealing seat surrounding the inlet port to obstruct fluid flow downstream thereof, except through the one or more vent holes.

The obturating member may take the form of a disc with a central through bore. A guide sleeve advantageously extends from the rear side of the disc in axial alignment with the central through bore to assist in the sliding along said guide rod.

Hence, in this variant, the end plate acts as a member that sealingly engages with the inlet port to define itself fuel flow passages by way of the vent holes and that also provides a sealing seat for the obturating member. In other words, the assembly includes its own sealing seat, whereby, in use, the obturating member does not come into contact with the material surrounding the inlet port. This is beneficial when the bore is provided in a wall made from soft metal, e.g. aluminium, since it avoids sealing seat wear off.

In another embodiment, the guide shaft has a free end on which the obturating member is engaged by means of a guiding blind bore. The obturating member may take the form of a disc, the guide bore being formed by a guide sleeve extending perpendicularly on the rear side of the disc. In this second embodiment, the obturating member cooperates with the actual sealing seat of the inlet port, provided in the bore. Compared to the first embodiment, the guide rod is shorter and there is therefore no rigid connection between the mounting portion and the sealing seat in the bore, resulting in a configuration with reduced stress.

The mounting portion can be generally designed as a cylindrical body, which comprises a peripheral thread for engaging with a corresponding thread in the bore. For sealing the assembly towards the exterior, the mounting portion comprises a peripheral groove with an annular sealing ring therein.

Depending on the embodiment, the guide rod may be made in one piece with the mounting portion or fixedly mounted to the latter, by any appropriate means.

The biasing means preferably include a coil spring surrounding the guide rod and resting against the mounting portion and the obturating member.

According to another aspect, the invention concerns a fuel injection system for an internal combustion engine comprising a component fuel passage or chamber defined by a wall portion, wherein the present pressure limiting valve assembly is arranged in a bore in said wall portion, in particular to serve as low pressure limiter.

In particular, the invention further concerns a high-pressure fuel pump comprising the present pressure limiting valve assembly arranged in a bore in a wall portion of the pump, in particular in the wall of a cam box.

### Brief description of the drawings

The present invention will now be described, by way of example, with reference to the accompanying drawings, in which:
Figure 1: is a cross sectional view (along center line of the blind bore) through an embodiment of the present pressure limiting valve assembly;
Figure 2: is a detail perspective view of the guide rod with end plate of the embodiment of Fig.1;
Figure 3: is a cross sectional view (along center line of the blind bore) through another embodiment of the present pressure limiting valve assembly;
Figure 4: is a cross sectional view through a prior art pressure limiting valve arranged in a cam box wall.

### DETAILED DESCRIPTION OF PREFERRED EMBODIMENTS

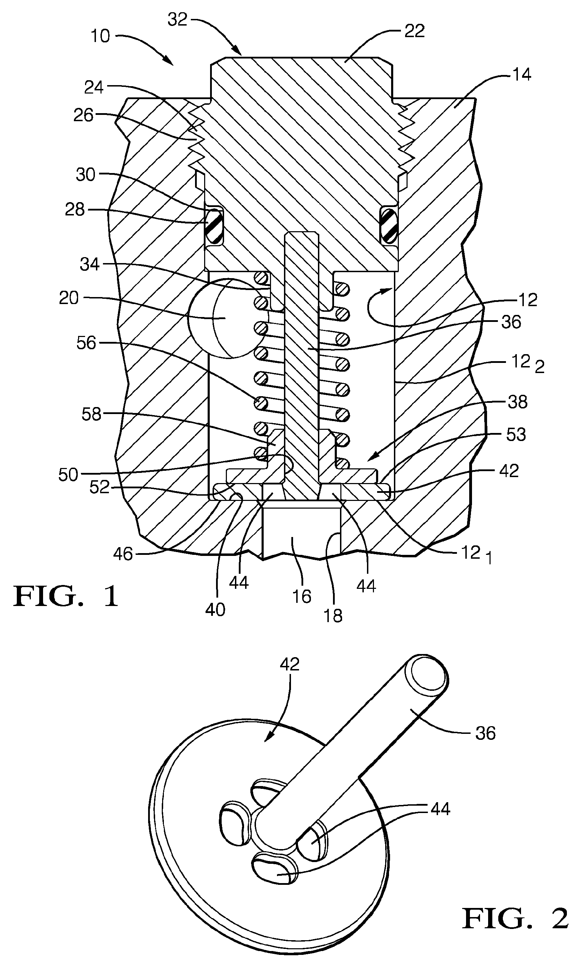

A first embodiment of the present pressure limiting valve assembly 10 is shown in Figures 1 and 2, installed in a bore in a wall of a chamber containing pressurized fuel, such as e.g. a cam box of a high pressure fuel pump of a diesel internal combustion engine injection system.

Such a pressure limiting valve assembly 10 is provided in the cam box housing to open when the pressure exceeds a predetermined pressure level, and discharge exceeding fuel towards a return / backflow line, typically leading back to the fuel tank. It thus allows maintaining the pressure in the cam box at a predetermined level and hence forms a low pressure limiter.

As it will be understood by those skilled in the art, valve assembly 10 can be arranged in any wall portion of a fluid passage or chamber of a fuel injection system, for example a pressure pump, a cam-box, or a fuel piping.

Referring to Fig.1, the pressure limiting valve assembly 10 is accommodated in a bore 12 provided in the wall portion 14 of a cam box chamber 16. This bore 12, which comprises a bottom wall 121 and lateral wall 122 (and is therefore also referred to as blind bore), is fluidly connected to chamber 16 via a fluid inlet port 18 located at one end portion, i.e. the bottom 121, of the bore 12. Bore 12 further comprises a fluid outlet port 20, distanced away from the inlet port 18 towards the other end portion of the bore 12, allowing fuel to be discharged to a back leak path to be returned to the fuel tank.

The pressure limiting valve assembly 10 comprises a mounting portion 22 that is fixedly arranged in the bore 12. Therefore, mounting portion 22 may be provided with a peripheral thread 24 engaging with a threaded portion 26 of the bore 12. The mounting portion 22 closes the bore 12 towards the exterior of the housing, so that a fluid passage is formed between the inlet 18 port and outlet port 20.

The mounting portion 22 is advantageously sealably mounted in bore 12 by means of an annular seal ring 28 arranged in a peripheral groove 30 located below the threaded portion 24 further inside the bore. The mounting portion 22 may have a generally cylindrical shape, forming a plug or head. The outer end face 32 of the mounting portion 22, i.e. opposite the inner end portion 34 facing the inlet port 18 in the blind bore 12, comprises a tool engaging portion (not shown) adapted to cooperate with standard tools for screwing the mounting portion 22 in the bore 12. The tool engaging portion may e.g. take the form of a socket head cap, hexagon head cap or any other sort allowing an engagement with an Allen Key, wrench or the like respectively.

It shall be appreciated that the mounting portion 22 supports a guide rod 36 that is designed to guide an obturating member 38, slideably engaged with rod 36, during its opening and closing strokes, the obturating member 38 allowing controlling the fuel flow through the inlet port 18.

In the embodiment of Fig.1, the guide rod 36 extends from the mounting portion 22 towards the inlet port 18, the latter being surrounded by a sealing seat 40. An end plate 42 is provided at the end of the guide rod 36, which is opposite to the mounting portion 22. The assembly, and in particular the length of the guide rod 36, is here designed such that, when the mounting portion is fixed in position, the end plate 42 sealingly rests on the annular sealing seat 40 surrounding inlet port 18.

The end plate 42, which has a general disc shape, extends substantially perpendicularly to the guide rod 36 and comprises one or more vent holes 44 (here a set of 4 vent holes). The vent holes 44 are arranged to be in fluid communication with chamber 16 through the inlet port 18. As indicated above, the outer side 46 of end plate 42 is adapted to sealingly rest onto the sealing seat 40 surrounding inlet port 18, thereby obstructing the fuel flow downstream of inlet port 18, except through the vent holes 46.

The obturating member 38, in turn, has a general disc shape and comprises a central though bore 50 by which it is engaged on the guide rod 36. The obturating member 34 is movable in the blind bore 12 along the guide rod 36 and comprises on its side facing the inlet port 18 a sealing surface 52 adapted to sealingly rest on a corresponding annular sealing surface 53 of the end plate and cover the vents 44.

The obturating member 38 is forced into the closed position on the end plate 42 by biasing means preferably in form of a coil spring 56 that is mounted (with radial clearance, i.e. without bearing) on the guide rod 36, in abutment against the obturating member 38 and the mounting portion front end 34. The valve assembly 10 is thus a normally closed valve. The spring force of the spring 56 is selected to maintain the desired pressure in the cam box chamber 16.

For improved displacement on the guide rod 36, the obturating member 38 comprises a guide sleeve 58 extending on its rear side in axial continuation of bore 50. An appropriate radial clearance exists between obturating member 38, respectively sleeve 58, and guide rod 36 to provide an operational play. The guide sleeve 58 is advantageously made in one piece with the disc of the obturating member 38.

In the present assembly, the guide rod 36 and end plate 42 are manufacture as one single component and then mounted to the mounting portion 22 with the spring 56 and obturating member 38 in place. The guide rod then preferably comprises an outer thread that cooperates with a threaded bling bore in end face 34 of mounting portion 22. Other fixing means can be envisaged between the guide rod and mounting portion 22, e.g. bayonetor interference fit. Preferably, the structural components of the valve assembly are made of steel.

It may be noted that this design with end plate is beneficial when the valve assembly is used in a wall portion made from a soft metallic material such as aluminium, because the sealing seat 53 with which the obturating member 38 cooperates to open or close the valve assembly is provided by the end plate 42. Accordingly, it is not the seat area 40 of the inlet port 18 that is systematically solicited by the obturating member 38, whereby bore walls wear out is avoided.

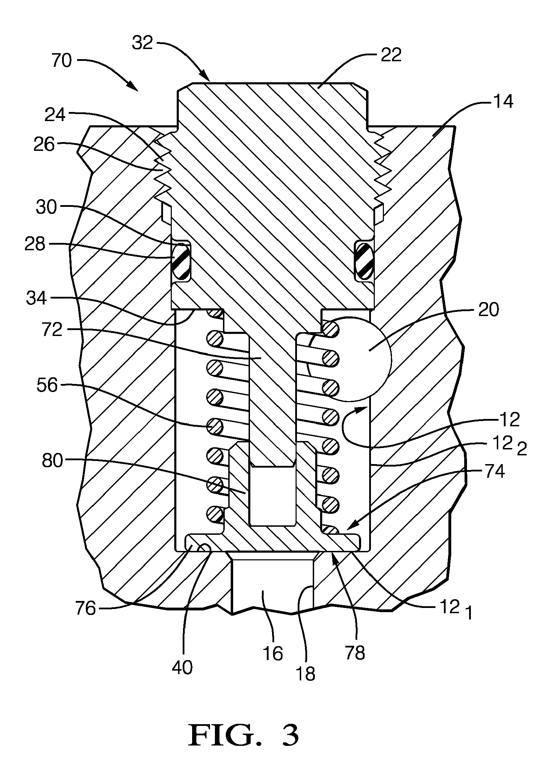

Figure 3 shows a second embodiment of the present pressure limiting valve assembly 70, which differs from the first embodiment mainly in the design of the guide shaft and obturating member, here designated 72 and 74 respectively. As in Fig.1, the mounting portion 22 is fixed in place in bore 12 by means of cooperating threads. In fact, the bore 12 and mounting portion 22 are similar to Fig.1. Therefore, identical or similar components are identified by same reference signs.

It shall be appreciated that in this second variant, the guide rod 72 has a shorter length than in Fig.1. While extending from the mounting portion 22 in direction of inlet port 18, guide rod 72 does not extend down to the inlet port 18. The obturating member 74 is in engagement with the guide rod 72 and can slide axially thereon between a closed position (shown in Fig.3), in which the obturating member 74 rests on the sealing seat 40 associated with inlet port 18 (which it surrounds) and an open position (not shown) raised from seat 40. Here also, the valve is normally closed, since spring 56 pushes obturating member 74 towards valve seat 40.

The obturating member comprises a disc shaped body 76, extending sensibly perpendicularly to guide shaft 72, and having a front side with an annular sealing surface 78 that is adapted to sealingly engage the sealing surface of annular seat 40 surrounding inlet port 18. The disc body 76 further includes on its rear side a guide sleeve 80, facing mounting portion 22, and forms a guide blind bore (or guide socket) engaged on guide rod 72. The disc body 76 and guide sleeve 80 are preferably manufactured in one piece. By way of this guide socket, the obturating member 74 is allowed to lift from the closed position while being axially guided by rod 72, ensuring a controlled displacement.

## Claims

1. A pressure limiting valve assembly for a fuel injection system comprising:
a mounting portion (22) for fixing said valve assembly in a bore (12) provided in a wall (14) of a fluid passage or chamber (16) of said fuel injection system, said bore (12) defining a fluid passage between a fluid inlet port (18) and a fluid outlet port (20);
an obturating member (38; 74), moveable in said bore (12), comprising a sealing surface (52) adapted to engage, in a closed position, a sealing seat (53; 40) associated with said inlet port (18);
biasing means (56) arranged in between said mounting portion (22) and obturating member (38; 74) to bias said obturating member (38; 74) against said sealing seat (53; 40);
**characterized in that** a guide rod (36; 72) extends from the mounting portion (22) towards said sealing seat (53, 40); and **in that** said obturating member (38) engages slideably with said guide rod (36; 72) to be guided by said guide rod during its opening and closing strokes.

2. The pressure limiting valve assembly according to claim 1, **characterized in that**:
an end plate (42) is mounted at the end of said guide rod (36), opposite said mounting portion (22), said end plate being configured to cooperate with said inlet port (18), and comprising one or more vent holes (44);
said obturating member (38) comprises a through bore (50) by which it is slideably engaged on said guide rod (36) and is pushed by said biasing means (56) towards said end plate (42); and
said end plate (42) is configured to cooperate with said obturating member (38) so that in said closed position, the obturating member (38) sealingly rests on the end plate's side facing said mounting portion (22) and covers said one or more vent holes (44), and that when the fluid pressure acting on the obturating member (38) through said one or more vent holes (44) exceeds the biasing force of said biasing means (56), said obturating member (38) raises off from said end plate (42) in an open position allowing flow of fluid through said one or more vent holes (44).

3. The pressure limiting valve assembly according to claim 2, **characterized in that** said obturating member (38) takes the form of a disc with a central through bore (50); and a guide sleeve (58) extends from the rear side of said disc in axial alignment with said through bore (50) to assist in the sliding along said guide rod (36).

4. The pressure limiting valve assembly according to claim 2 or 3, **characterized in that** said end plate (42) is configured to sealingly engage a sealing seat (40) surrounding said inlet port (18) to obstruct fluid flow downstream thereof, except through said one or more vent holes (44).

5. The pressure limiting valve assembly according to claim 1, **characterized in that** said obturating member (74) comprises a blind guide bore by which it is engaged on the free end of said guide rod (72).

6. The pressure limiting valve assembly according to claim 5, **characterized in that** said obturating member (74) takes the form of a disc (76) and said guide bore is formed by a guide sleeve (80) extending perpendicularly from the rear side of said disc.

7. The pressure limiting valve assembly according to any one of the preceding claims, **characterized in that** said mounting portion (22) has a cylindrical body and comprises a peripheral thread (24) for engaging with a corresponding thread (26) in said bore (12).

8. The pressure limiting valve assembly according to any one of the preceding claims, **characterized in that** said guide rod is made in one piece with said mounting portion or is fixedly mounted to the latter.

9. The pressure limiting valve assembly according to any one of the preceding claims, **characterized in that** said biasing means (56) is a coil spring surrounding said guide rod (36; 72) and resting against said mounting portion (22) and said obturating member (38; 74).

10. A fuel injection system for an internal combustion engine comprising a component fuel passage or chamber defined by a wall portion, a pressure limiting valve assembly according to any one of claims 1 to 10 being arranged in a bore in said wall portion.

11. A high pressure fuel pump comprising a pressure limiting valve assembly according to any one of claims 1 to 10 being arranged in a bore in a wall portion thereof to serve as low pressure limiter.
